# EUROPEAN PATENT APPLICATION

(11) **EP 1 384 682 A2**
(43) Date of publication of application: **28.01.2004**
(21) Application number: 03254564.2
(22) Date of filing: 21.07.2003
(51) Int. Cl.: B65D 77/24

(54) **Packaging containing fragrance**

(30) Priority: 25.07.2002 US 202958; 20.05.2003 US 441574
(71) Applicant: INTERNATIONAL FLAVORS & FRAGRANCES INC., New York New York 10019 (US)
(72) Inventor: Popplewell, Lewis Michael, Morganville New Jersey 07751 (US); Henson, Lulu S., Plainsboro New Jersey 08536 (US)
(74) Representative: Mercer, Christopher Paul

(57) **Abstract**

Packaging materials and packages that transfer fragrances to foods and other products (100) via the vapor phase are disclosed. The present invention provides a source of desired fragrance, a suitable environment for vapor transfer, and an appropriate food substrate to which flavor and fragrance is added. Examples of the source of fragrance can be a packaging film (102) containing fragrance (103), a sachet of absorbed flavor material, a tape or label applied to the inside of a package, and a flavor diffusing granule or an active system for delivering flavor vapor to the environment. Materials that are preferably treated using the present invention include snacks, confections, baked goods, fresh plant materials, cereals and beverages, as well as non-food products. The time required for flavor transfer is dependent primarily on the volatility and concentration of the fragrances, absorptive capacity of the food, and the intensity of the flavor desired.

## Description

The present invention relates to packaging materials and more particularly to polymeric packaging materials used for food and other consumer products.

### BACKGROUND OF THE INVENTION

A wide variety of foods and consumer products rely on flavors and fragrances to enhance their appeal. Fragrances in particular play a large role in creating an appeal or attraction toward a particular product, cooperating with the senses of sight and touch to create an overall sensory impression. A fragrance is any molecule that diffuses via vaporization into the atmosphere (under local conditions of temperature and pressure) and subsequently activates a specific receptor in the nasal cavity. Similarly, volatile flavors activate a specific receptor in the nasal cavity but enter retronasally after being placed in the mouth. A non-volatile flavor, on the other hand, is conventionally referred to as a "taste," e.g., salt, sugar monosodium glutamate and non-volatile acids, and operates via activation of specific receptors within the mouth after they are diffused in the saliva. Therefore, in terms of the present invention both volatile flavors and fragrances can be classified as "fragrances." Although fragrances are extremely important for all forms of food and drink, they also play a role in the desirability of other consumer products that are not ingested.

The sensations relating to smell and taste are complex. Often the level of fragrances needed in a product to achieve significant human response is very low. This is particularly true for a fragrance that has a high tendency to diffuse under normal atmospheric conditions (high vapor pressure) and has a low odor threshold (high odor activity). Due to their nature, however, these are often lost during the stress of processing and/or distribution that occur during the chain of production. Typically, attempts have been made to compensate for these losses by over-dosing the desired flavor components, or attempting to protect the flavor component via some form of encapsulation. For example, US-A-6,299,917 (Appleby) discloses impregnating liquid smoke flavoring into cellulose for use as a meat casing. Although these methods can be functional in some cases they often result in unbalanced profiles due to the uncertain nature of the flavor loss, particularly relative to the change over time during the shelf life. Moreover, techniques such as adding fragrance to the product or encapsulation of the product add undesirably to its cost. Additionally, it is often difficult to maintain the appearance, texture, integrity or overall state of the product using these techniques. In the realm of foodstuffs, fresh fruits and vegetables are prime examples of items that are difficult to "treat" with additional flavor or aroma. While an injection process, for example, might be effective, discoloration or other degradation of the fruit itself would likely result.

It is known to apply a dose of scented substance to a package so it diffuses into the headspace without contacting the product. For example, US-A-4,564,535 (Altenschopfer, et al.) discloses scenting cardboard packaging materials applying scented pastes to the packaging material by spraying, using a spreading device, or painting. The Altenschopfer, et al. patent discusses the difficulty of scenting the product itself, and discloses that a gel containing a perfume should be applied to the upper surface of a cardboard box to avoid contact with the product. Similarly, US-A-6,394,264 (Rivello) is directed to a cap that contains a "dose" of fragrance that is held within a semi-permeable barrier so it diffuses into the headspace above the liquid in a bleach or detergent bottle, but avoids contact with the actual product. Both references discuss the difficult problem of adding a scent to bleaches and detergents, due to the reactive nature of bleach.

Others have focused on providing perfume samples in a manner that preserves them, yet permits them to diffuse into the air or be applied to the skin when the packaging is opened. For example, US-A-5,885,701 (Berman et al.) describes a colloidal suspension odorant composition comprised of a colloidal material and a liquid fragrance component provided in a package comprised of a multiple layer top substrate and a multiple layer bottom. Similarly, US-A-4,880,690 (Szycher) describes a system using a polyurethane layer in connection with fragrance oil to assist in the emission of fragrance on a perfume patch after the sealed package is opened.

None of these prior art packages address the problems outlined above. Therefore, there remains a long-felt yet unmet need for providing suitably stable or enhanced levels of fragrances in foods and other consumer goods. It would thus be desirable to provide materials and methods for packaging foods and other goods that enhance the presence of fragrances. It would further be desirable to provide such improvements in a manner that permitted their application across a wide variety of packaging techniques and that permitted their implementation in a cost-effective manner.

### SUMMARY OF THE INVENTION

Surprisingly, it has now been found that the transfer of fragrances to foods and other products via the vapor phase is an efficient means of delivering fragrances. The present invention therefore provides a source of the desired fragrances, a suitable environment for transfer, an appropriate food substrate and a sufficient amount of time for transfer to occur. Examples of the source of the fragrances can be a packaging film containing fragrances, a sachet of absorbed flavor material, and a flavor diffusing granule or an active system for delivering flavor vapor to the environment via mechanical means. The environment is most preferably closed and of minimum volume in order to provide the maximum concentration of fragrances, such as a sealed food package. However, in certain embodiments within the scope of the present invention, the environment could be more open and provide a flow system in which a product is contacted with aroma vapor. Materials that are preferably treated using the present invention include snacks, confections, baked goods, fresh plant materials, cereals and beverages, as well as non-food products. The time required for flavor transfer is dependent primarily on the volatility and concentration of the fragrances, absorptive capacity of the food, and the intensity of the flavor desired.

The present invention thus provides methods of transferring a fragrance to a product comprising the steps of creating a package having an interior and placing a source of the fragrance within the interior and contacting the product with the fragrance. Preferably, the package interior has at least one interior surface containing a fragrance, and most preferably, at least a portion of the interior surface is a layer of polymeric film containing the fragrance or a layer of composite of polymeric films and the fragrance.

Alternatively, and in accordance with another embodiment of the present invention, a sachet of absorbed fragrance is placed inside the package. In certain other embodiments, this is affected by diffusion through a lid cap or closure provided for a container that has a compartment that contains a fragrance emitting material or sachet.

In certain preferred embodiments of the present invention the packaging material has at least one polymer layer, and at least one fragrance in an amount sufficient to diffuse within the interior of a package made from the packaging material under normal conditions of temperature and pressure. The packaging material uses either a polymer film containing a fragrance or a polymer film composite of a first polymeric material and a fragrance. In preferred embodiments the material comprises at least an inner aroma layer and an outer barrier layer, with the inner aroma layer containing the fragrance and the outer barrier layer being relatively more inert and a barrier to the diffusion of the fragrance.

The present invention also provides improved product packages that have a polymer impregnated with a fragrance, which is preferably a film laminated to the package, or alternatively is one or more polymer beads, most preferably contained in a sachet. Alternatively, loose polymer strips inserted inside the package may also be used. Fragrance absorbed or otherwise deposited on powdered or granular materials such as silicon dioxide, starch, clay, sugar, salts, cellulose, dextrin, silicate, cellulose, fat, carbon, calcium carbonate, sodium bicarbonate, citric acid, flour, corn meal, and the like may also be packed in a porous sachet for subsequent diffusion into the product when packaged.

Alternatively, in certain preferred embodiments, structures comprising a fragrance-containing material or fragrance reservoir and an adhesive backing resembling adhesive tape or labels may be affixed to an inside surface of the package. The strips contain fragrance either in a discrete compartment or dispersed or through the structure, and in certain embodiments will selectively release the fragrance upon the application of an external stimulus, such as heat or pressure. The external stimulus can be related to the process of making the package, the process of using or preparing the package for use, or the process of opening the package. For example, it may be desirable to activate fragrance when sealing a bag during manufacturing, while on the other hand, certain products are improved by releasing fragrance only when the package is heated prior to serving, or opened for serving.

Finally, an alternative embodiment to the closed packages is a package comprising a source of gas flow containing fragrance wherein the fragrance is transferred to the product within the package by the flow of gas contacting the product.

### BRIEF DESCRIPTION OF THE DRAWINGS

Fig. 1 is a view of a first embodiment of a package made in accordance with the present invention including an expanded view of a cross-section of a sheet of film used in the package.
Fig. 2 is a cross-sectional view of a second embodiment of a sheet of film made in accordance with the present invention.
Fig. 3 is a perspective view, partially broken away, of another embodiment of the present invention.
Fig. 4 is a cross-sectional view of another embodiment of the present invention.
Fig. 5A is a plan view of a package made in accordance with the invention in which an internal structure resembling a label is attached to the side of the package.
Fig. 5B is a plan view of an alternative package similar to Fig. 5A.
Fig. 5C is a view of an alternative package similar to Fig. 5A.
Fig. 6A is a partially broken away plan view of a sealed package made in accordance with the present invention.
Fig. 6B is a cross-sectional view of the package shown in Fig. 6A.
Fig. 7 is a partially broken away plan view of a package made in accordance with the present invention.
Fig. 8 is a perspective view of a container and lid made in accordance with the present invention.
Fig.9 is a cross sectional view of a label-like device which contains a fragrance reservoir.
Fig. 10 is a cross sectional view of a fragrance containing polymer label type device attached to the packaging.

### DETAILED DESCRIPTION OF THE PREFERRED EMBODIMENTS

The present invention can be implemented in several preferred embodiments, which are discussed below, along with several illustrative examples. The categories of the invention described below and the examples are provided to provide an understanding of the invention and are not meant to be limiting.

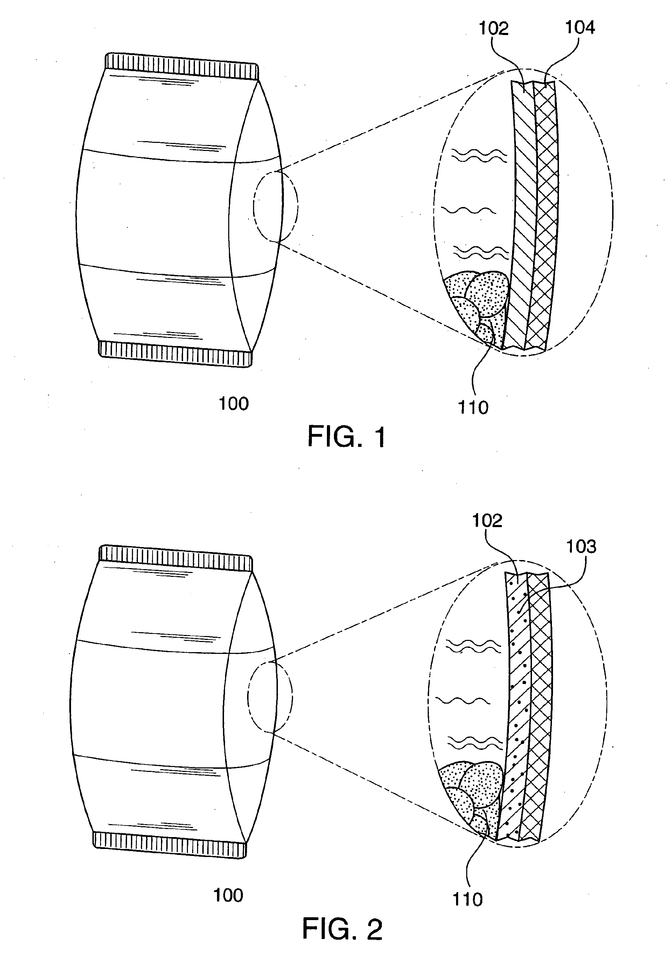

In accordance with a first aspect of the present invention, packaging material containing fragrances is produced using common techniques such as extrusion, film formation and lamination, all well known to those of skill in the art. In a typical embodiment, the fragrance is formed along with the film and a package is produced from the aroma-containing film using conventional techniques. As seen in FIG. 1, a laminated bag 100 comprises a polymeric film layer 102 blended with fragrance and an outer layer 104 made from polymer, foil, or other suitable materials known in the art that act substantially as a barrier to the transmission of the fragrance. A product 110 is sealed within the package 100 and over time the product 110 is in intimate contact with the fragrance (shown by the wavy vapor lines in FIG. 1) and will absorb the fragrance that is vaporized within the package 100 (or will transfer it by direct contact). As seen in the Examples below, over time, the fragrance is transferred to the product 110 at a perceptible level, thus either adding a fragrance or flavor to the product, or enhancing once that is diminished. The technique of making a package from a material containing the fragrance will be most efficient if the aroma containing film is used as an inner layer of a packaging laminate that has other layers that are barriers to the diffusion of the fragrance to the environment outside the package, in other words, an impermeable outer layer. This type of packaging could be used on a wide variety of products, including baked goods and snack packages, as well as fruit and vegetable packages.

A second embodiment of the present invention is distinct from the first in that the fragrance is compounded with a polymer to create a composite that diffuses the fragrance. In this embodiment, the end product, such as a packaging bag can be nearly the same. The difference lies in that in the second embodiment, the fragrance is non-homogeneously present in the packaging material. As seen in FIG. 2, a package may be constructed substantially in accordance with that described above with reference to FIG. 1, however, the fragrance-containing layer 102 contains fragrance 103 in a matrix. In a package containing at least an element made from such a composite layer, when the package is sealed fragrances will be transferred to the product at perceptible levels over time. This particular embodiment is widely useful, but would be a particularly preferred implementation for dry drink containers that carry powdered drinks such as instant coffee, iced tea and similar drinks. As in the first embodiment, this embodiment is also preferably used in packaging for snack and baked goods packaging, as well as fresh fruit and vegetable packages.

In either of the embodiments illustrated in FIGS. 1-2, an additional interior layer is added in some embodiments to add strength or to mediate the amount of fragrance transferred over time, by selecting the permeability of the inner layer, e.g., by choosing the sizes of apertures in a perforated sheet. In such embodiments, however, it will be preferable to permit direct contact between the products within the packaging and the fragrance.

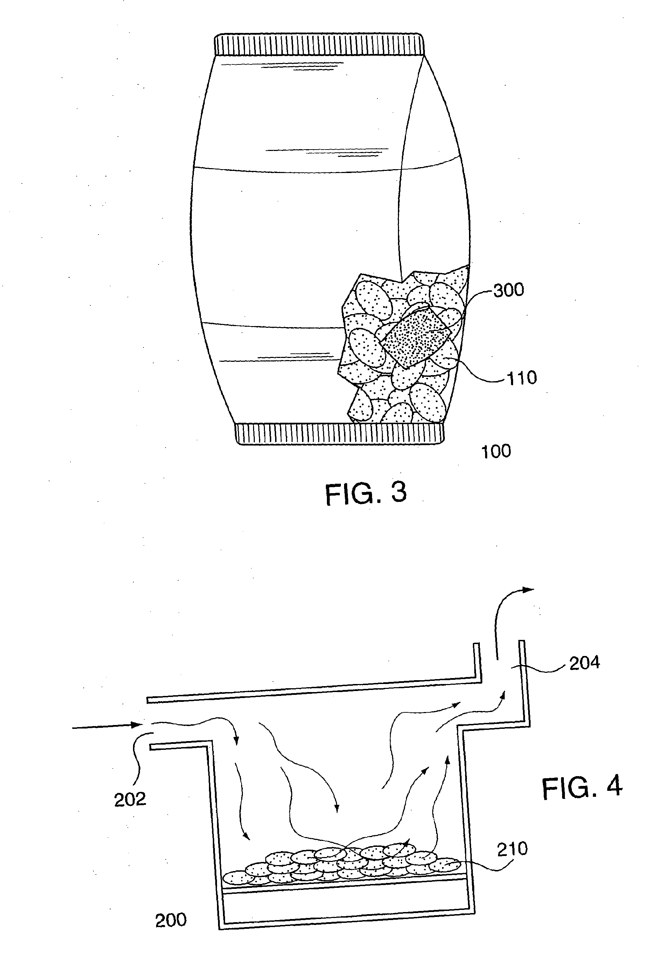

A third embodiment of the present invention is illustrated in FIG. 3, which shows a package 100 substantially the same as that shown in FIGS. 1-2 except that the package contains a sachet 300 as seen in the broken away view. The sachet 300 includes absorbed flavor material, in which fragrances are absorbed at high levels on suitable solid supports such as silicon dioxide (SiO₂), clay, dextrin or starch. As seen in FIG. 3, the sachet 300 is disposed within a container or package 100 and emits fragrance while in contact with the product 110 and over time the fragrances will be transferred from the sachet at a perceptible level to the food product. This embodiment allows a flavor-diffusing element to be made efficiently, and to be added to the food package before or during the packaging operation without affecting the actual construction of the package.

Finally, as mentioned above, in addition to providing a sealed package with a headspace into which a quantity of fragrance will diffuse prior to being taken up by the product, it is also feasible to incorporate the present invention into flow through systems that either rely on air circulation or forced ventilation to flow air or other gases over a product while in storage. Such systems can take advantage of the product enhancing qualities provided by the embodiments described above in situations where a sealed container with a headspace is not practical. Referring now to FIG. 4, there is shown in cross-section a schematic representation of a chamber 200, which may be a portion of a larger apparatus or container, and a source of inlet 202 and exhaust 204. A flow of gas, most preferably air flows through the chamber 200 and contact the product therein 210, as shown by the arrows. The gas includes volatilized fragrance that may be added by any known means. The exhaust may either be directed to another vessel, to the environment or may be recirculated. The exposure of the product to the flow of fragrance containing gas will transfer the flavor and fragrance to the product, as described above with reference to sealed container embodiments. An example of an application of this technique would be during the drying or cooling process for puffed cereals or cookies, where enhanced flavor and fragrance would be desired additions, along with a stream of dry air that would remove excess moisture and/or cool the product.

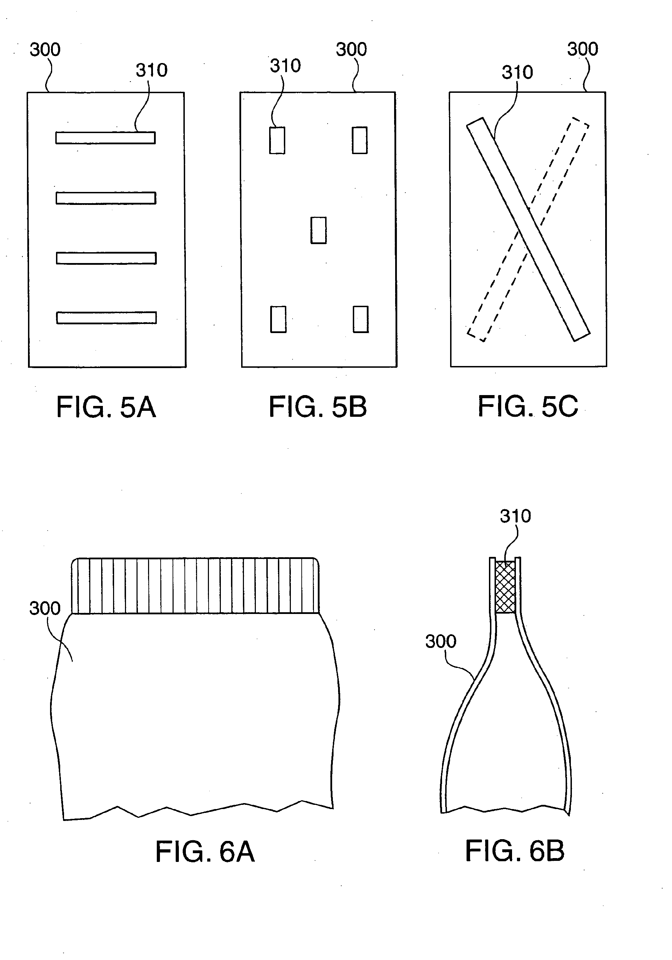

The present invention also provides a number of embodiments by which flavor or fragrance is delivered via the material of the package or container in which the materials are not formed as a unitary film. For example, referring to FIGS. 5A-5C, there is shown a plan view of a sheet of material 300 that has one or more strips of thick film 310, for one example a cast film, affixed to one side. The strips 310 are essentially a label or a strip of tape and the technology to manufacture and apply such strips is well known in the plastics and packaging arts. In the embodiments illustrated in FIGS. 5A-5C the thick film 310 is applied to the package material 300 in a pattern that results in an even distribution of aroma release within a package. The strips 310 can be arranged in various patterns on one side of the sheet 300, as shown in FIGS. 5 A and 5B, or can be applied to both sides, as shown in FIG. 5C. As known in the art, the thick film 310 can be affixed using adhesive, or can be adhered by thermosetting or similar processes that use a combination of heat or pressure to bond layers together. Referring again to FIG. 5A a label 310 is thus affixed to the bag material 300. This embodiment is a highly preferred embodiment of the invention. The label is preferably constructed as a sachet-like article affixed to the package, preferably along a package wall, and is preferably affixed to the package wall via an acceptable adhesive, embedded by force, heated to form a weld with the package wall and the like. In another preferred embodiment, the label can be a tape-like material with the fragrance material adhered to one side of the tape and the other side of the tape adhered to the package wall. The size of the label in the package is easily controlled to deliver the desired level of fragrance within the package. A further advantage of this application is the ability to provide multiple labels within the package, as illustrated. The labels are useful for delivering the same fragrance or different fragrances as well as targeting fragrances throughout the package 300. For one example, it might be desirable to provide a highly volatile aroma via a label 310 disposed near the bottom of a package 300. A highly volatile aroma, such as a fragrance found in the headspace of a package, is then allowed to contact the contents of the package contents before any excess is found into the headspace of the package. Alternatively a less volatile fragrance could be placed at or near the top of a package and allow the fragrance to disperse to the bottom of the package. In preferred embodiments, the label, tape or thick film 310 will contain fragrance particles blended in a matrix material. The fragrance particles can be absorbed onto a suitable carrier, such as a food grade acceptable material such as maltodextrin, cornstarch, and other food grade acceptable materials. In a highly preferred embodiment the fragrance materials are encapsulated. The encapsulated fragrance materials are then placed in sachet like materials or embedded into a tape, which is placed on the package and the like, as discussed immediately above. An advantage of the encapsulation technology is that it protects the fragrance until activated. For example the capsule material could be compromised by the application of heat, radiation source, pressure and the like.

Referring now to FIGS. 6A-6B, another embodiment of the present invention is shown. In this embodiment, the thick film 310 described above is formulated so that the flavor or fragrance is combined with an appropriate polymer or other material that is used as an adhesive (or in conjunction with an adhesive) to seal the package. In accordance with this embodiment of the invention, when the package is opened, flavor or fragrance is released. This has the advantage of preventing the contents of the package from absorbing or reacting with the flavor or fragrance chemicals during storage but provides the desired release into the headspace during use. In other words upon breaking the seal, flavor or fragrance chemicals are released into the interior of the package and toward the person opening the package, providing the desired effects discussed above. There are numerous encapsulation technologies disclosed in the art. Suitable patents include but are not limited to US Patents Nos. 2,800,457; 3,041,288; 3,415,758; 3,516,941; 4,124,521; 4,145,184; 4,402,856; 4,446,032; 4,536,315; 5,066,419; 5,137,646; 5,154,842; 5,188,753; 6,194,375; and 6,261,483. Other suitable technologies are disclosed in the following PCT applications: WO 01/498173 assigned to Bayer; WO 01/ 62376 assigned to Henkel and WO 02/34225 assigned to Proctor & Gamble.

In the same vein, those of skill in the art will appreciate that the concept of providing a vapor transfer mechanism within a package is applicable beyond fragrances. The embodiments of the present invention described herein include flavor-precursors that interact with the constituents of the product to create new chemical structures having desirable flavor effect, as well as volatile actives that provide therapeutic, nutritional or preservative effect. As used in the specification, IFF is understood to mean International Flavors & Fragrances Inc., N.Y., N.Y. Unless noted to the contrary all weights are understood to be weight percent.

### EXAMPLE I

### PACKAGING FILM LAYER FOR FLAVORING TORTILLA CHIPS

A. Sheets of POLYIFF [IFF] film with either IFF roast beef flavor (A-1101-2) or butter flavor (A-1231-1) were used to line the inner compartment of a foil pouch. Unflavored tortilla chips (Frito-Lay, Inc, Plano, TX, USA) were placed between the sheets of film and the pouch was heat-sealed. After two days at room temperature, the pouch was opened and the chips evaluated organoleptically by a group of experienced tasters. The chips had acquired the roast beef or the butter flavor used in the film.
B. POLYIFF film was prepared with an IFF herb flavor (1451-1) or IFF butter flavor (1441-1). Foil pouches were lined with this film, filled with unflavored tortilla chips and sealed. The chips again acquired the flavor used in the film after two days at room temperature.
C. POLYIFF film was prepared with an IFF tutti-frutti flavor (0722-2). Unflavored puffed cereal (E201702) pieces were sealed inside the film. After a few days the cereal had picked up the tutti-frutti flavor of the film and the toasted corn character of the cereal was diminished.

### EXAMPLE II

### USE OF POLYMER FILM TO FLAVOR FRUIT

Royal Gala apples weighing approximately 210 grams each were individually sealed within polyethylene bags containing strips of polymer films made from low-density polyethylene, ethyl-vinyl acetate (EVA) and flavor. The sealed bags were stored for approximately twenty hours at ambient temperature. Several experienced tasters then sampled the apples for flavor.
A. In this package, a film strip weighing approximately 2 grams contained 0.5% of an IFF peppermint flavor for a total flavor dosage of 0.005% was placed into the polyethylene bag. The peppermint flavor was clearly evident upon eating the apple slices.
B. In this package, a film strip weighing approximately 2 grams contained 1% methyl salicylate for a total flavor dosage of 0.01%. The flavor was clearly evident upon eating the apple slices.
C. In this package, a film strip weighing approximately 2 grams contained 1% IFF chocolate flavor for a total flavor dosage of 0.01%. The chocolate flavor was clearly evident upon eating the apple slices.

### EXAMPLE III

### USE OF A SACHET CONTAINING POLYMER BEADS TO FLAVOR POTATO CHIPS

A sachet of ethyl-vinyl acetate beads, containing a 5% bacon flavor made by IFF, was made by sealing 2 grams of the beads within a porous bag made of non-woven material. This sachet was added to 100 grams of potato chips (Frito-Lay, Inc., Plano, TX) in a foil laminate pouch. After approximately 2.5 days at room temperature, the pouch was opened and the chips evaluated organoleptically by a group of experienced tasters. The chips had acquired a mild but distinct bacon flavor. The flavor of the chips at the bottom of the bag, closest to the sachet was significantly stronger indicating that diffusion was not complete.

The foregoing Examples illustrate that flavoring food products via vapor diffusion is effective but are meant to illustrate the invention and are not limiting or exhaustive.

An alternative embodiment of the present invention provides packages that use well-known and conventional moisture absorbing materials (desiccants) to deliver flavor or fragrance to the package contents in the form of a "delivery packet" or sachet, as discussed above, but instead of being dropped in among the contents of the package, are adhered to an interior surface of the package. The sachets can be attached at strategic locations within the package to provide even distribution of aroma or flavor. In addition to containing a flavor or fragrance, the delivery packet can also contain material that will absorb undesired moisture or oxygen from the package. Suitable materials for absorbing oxygen include ferrous oxide containing products and the like. Moisture absorbing materials are typically silica or silica gel materials. Those of skill in the art can readily formulate additional combinations of materials that absorb oxygen and moisture from the contents of the packages. Alternately the oxygen and moisture absorbing materials, alone or combined could be combined with the fragrance delivering material in various combinations and placed in sachet like devices included within the package.

As discussed above with reference to FIGS. 6A-6B, the sachets used in certain embodiments of the present invention are preferably formulated with flavor or aroma "capsules" that release flavor or fragrance upon the application of mechanical pressure or other force. This has the advantage of minimizing exposure to (or loss of) the flavor or fragrance material during process of manufacturing the final product, for example, filling a package with food, thereby reducing the contamination of both the environment and the flavor or fragrance material itself. Thus, in one aspect of these embodiments of the present invention, a preferred method of manufacturing a package is provided wherein pressure-activated capsules are packaged with flavor sachets, and this combination is added to a food package, either by being dropped in, or preferably adhered to the interior of the package as discussed above. The package is then sealed, and in the sealing process, rollers or other devices place mechanical force upon the package at the location of the sachets to break the capsules so that flavor or fragrance is released into the sealed container.

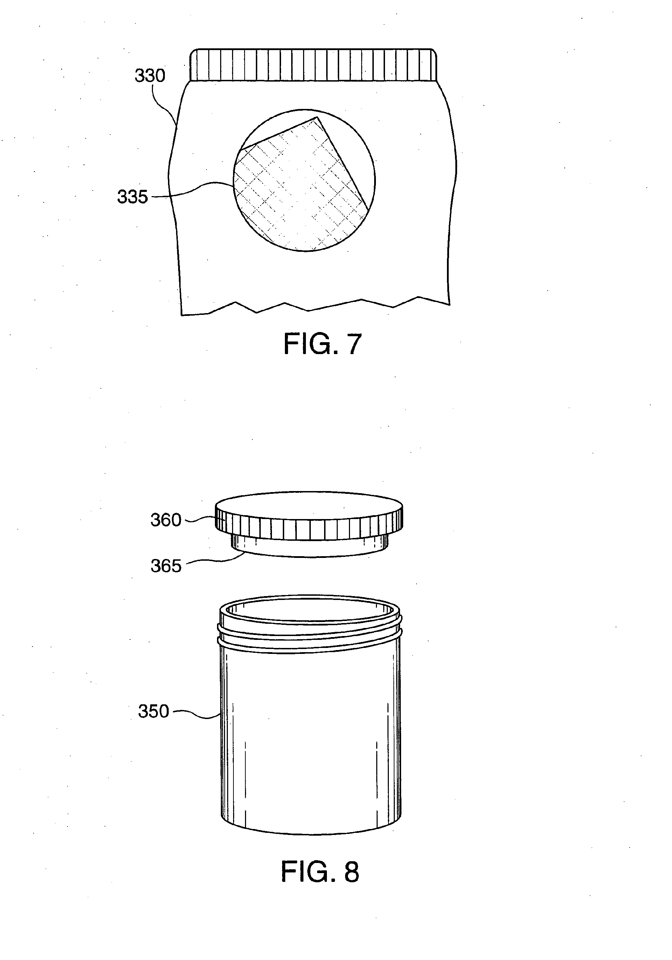

Alternatively, in certain embodiments of the present invention, flavor or fragrance can be impregnated into paper or similar support materials, such as woven or non-woven fabrics, and the impregnated section of the material can be coated such that the flavor or fragrance is activated by a trigger such as heat, moisture or mechanical force. One example of this embodiment of the present invention is illustrated in FIG. 7. In this example, a paper or paper laminate bag 330 typically used for microwave popcorn is created with an impregnated section 335 that contains butter aroma. The butter aroma is in turn formulated so that aroma is only released upon the melting of a coating to release the aroma. In other words, upon application of heat to the product during preparation for serving, the aroma is released. As known in the art, different materials absorb microwave radiation at different rates, and thus provide differential heating patterns that can be used advantageously with the present invention. Numerous types of food products (and some non-food products) are heated in both microwave and conventional ovens, for both individual and institutional use, and would be improved by incorporating this aspect of the present invention. Such applications of the invention are not limited to impregnated paper containers, since many packaged food items are provided in aluminum or metallized paper or polymer film containers. It is preferred, however, to provide at least one layer of material, whether woven, non-woven, polymeric or otherwise be provided that is impregnated with the desired flavor or fragrance.

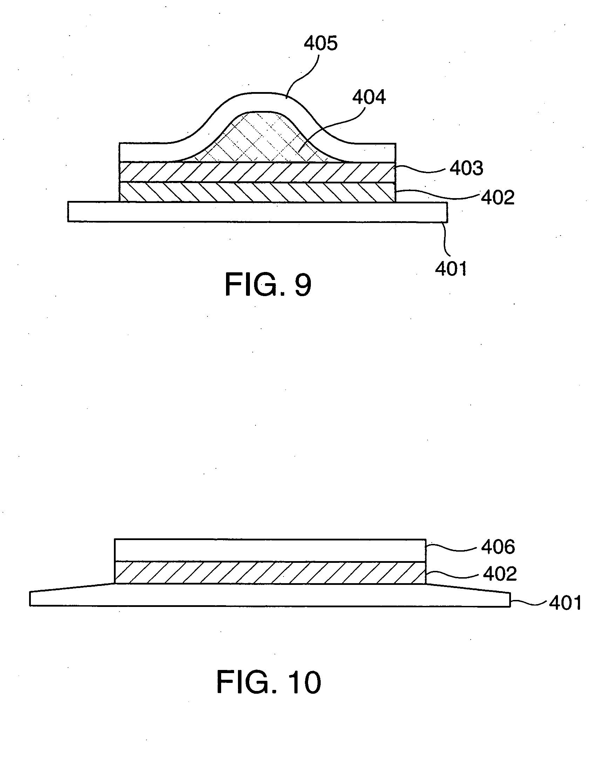

Referring to FIG. 8, yet another embodiment of the present invention is illustrated. In this embodiment, the flavor or fragrance is to a flavor carrier that is integrated into a lid, cap or closure 360 that is used in conjunction with a container 350. Preferably, a compartment 365 is provided as part of the lid 360. In certain embodiments, the packets or sachets discussed above are simply disposed within the compartment 365, which is designed to be air permeable, and thus permits the fragrance or flavor in the sachet to be admitted to the headspace above the contents of the container 350, either continuously, or upon the application of force during opening of the container, or upon the application of heat or other stimulus, as discussed above. Thus, for one example, the lid 360 could be for a single serving soup package, and upon heating in a microwave, the materials disposed in the compartment would emit scents that complimented or enhanced the soup yet would become diminished or adulterated if mixed with the soup itself. FIG. 9 is a cross sectional view of a label like material that could be placed within the package at a desired location, top, bottom sides of the package. In addition, it is easily imagined that the plurality of these labels could be applied within the package. In another embodiment of the invention the labels could contain the same or different fragrances. The packaging material 401 is in contact with a suitable adhesive 402 which is preferably in contact with a fragrance impermeable material. This allows the fragrance or fragrance containing material 404 contained in a reservoir like material to be provided to the interior of the package rather than the fragrance potentially migrating into the adhesive.

FIG. 10 is a cross sectional view of the packaging material 401, adhesive 402 and a fragrance containing polymer 406 in a label type embodiment of the invention. As noted above, one or more of the labels can be placed within the package.

In any preferred embodiment of the present invention the fragrance containing material, or at least the vapors emanating therefrom, in any form, is in contact with the contents of the package. Thus, as explained above, it is preferred that in certain embodiments where an interior barrier layer is incorporated for strength, aesthetic or other reasons, this layer will most preferably contain perforations or apertures so as to "allow contact between the fragrance containing layer and package contents. However, it is also preferred that the packaging is substantially air impermeable and holds the fragrance in the head space above the product, typically requiring an additional container element or at the very least a laminated film with an air-impermeable outer layer. In certain preferred embodiments, the packaging is resealable, as is well known in the art using a "zipper" feature or the like in the case of a pouch or bag, or in other embodiments, a cap or lid. After closing the resealable device the headspace over the product is refilled with the fragrance chemical thus providing a renewed concentration of fragrance that is released and sensed by the consumer when the container is reopened.

In these preparations, the compound of the present invention can be used alone or in combination with other fragrance compositions, solvents, adjuvants and the like. Those with skill in the art will appreciate the nature and variety of the other ingredients that can be used in combination with the compound of the present invention.

Many types of fragrances can be employed in the present invention, the only limitation being the compatibility with the other components being employed and the suitability to include the fragrance with a food when used in this manner. Suitable fragrances include but are not limited to fruits such as almond, apple, cherry, grape, pear, pineapple, orange, strawberry, raspberry and the like. In addition, flower scents such as lavender-like, rose-like, iris-like, and carnation-like if the package is desired to have a floral scent. Fragrances may also be derived from various oils, such as essential oils, or from plant materials such as peppermint, spearmint and the like.

A list of suitable fragrances is provided in U.S. Patent No. 4,534,891, the contents of which are incorporated by reference as if set forth in its entirety. Another source of suitable fragrances is found in Perfumes, Cosmetics and Soaps, Second Edition, edited by W. A. Poucher, 1959. Among the fragrances provided in this treatise are acacia, cassie, chypre, cyclamen, fern, gardenia, hawthorn, heliotrope, honeysuckle, hyacinth, jasmine, lilac, lily, magnolia, mimosa, narcissus, freshly-cut hay, orange blossom, orchid, reseda, sweet pea, trefle, tuberose, vanilla, violet, and the like.

As used herein "olfactory effective amount" is understood to mean the amount of compound in perfume compositions the individual component will contribute to its particular olfactory characteristics, but the olfactory effect of the perfume composition will be the sum of the effects of each of the perfume or fragrance ingredients. Thus the compounds of the invention can be used to alter the aroma characteristics of the perfume composition by modifying the olfactory reaction contributed by another ingredient in the composition. The amount will vary depending on many factors including other ingredients, their relative amounts and the effect that is desired.

The level of compound of the invention employed in the perfumed article varies from about 0.005 to about 20 weight percent, preferably from about 0.1 to about 10 and most preferably from about 0.5 to about 5 weight percent. In addition to the compounds, other agents can be used in conjunction with the fragrance. Well known materials such as surfactants, emulsifiers, and polymers to encapsulate the fragrance can also be employed without departing from the scope of the present invention.

The fragrances of the invention can range widely from 0.005 to about 25 weight percent of the perfumed composition, and preferably from about 0.1 to about 15 weight percent. Those with skill in the art will be able to employ the desired level of the compound of the invention to provide the desired fragrance and intensity.

The term "foodstuff' as used herein includes both solid and liquid ingestible materials for man or animals, which materials usually do, but need not, have nutritional value. Thus, foodstuffs include meats, gravies, soups, convenience foods, malt, alcoholic and other beverages, milk and dairy products, seafoods, including fish, crustaceans, mollusks and the like, candies, vegetables, cereals, soft drinks, snacks, dog and cat foods, other veterinary products and the like.

When the compounds of this invention are used in a flavoring composition, they can be combined with conventional flavoring materials or adjuvants. Such co-ingredients or flavor adjuvants are well known in the art for such use and have been extensively described in the literature. Requirements of such adjuvant materials are that they be ingestibly acceptable and thus nontoxic or otherwise non-deleterious. Apart from these requirements, conventional materials can be used and broadly include other flavor materials, vehicles, stabilizers, thickeners, surface active agents, conditioners and flavor intensifiers. Note that materials that have low volatility are added directly to the food product as they will not be transferred via vapor diffusion in an efficient manner. For example, salts and other taste active materials may be added directly to potato chips as is normal practice, while volatile flavors are transferred to the product via the vapor phase from a suitable source placed within the package.

Such conventional flavoring materials include saturated fatty acids, unsaturated fatty acids and amino acids; alcohols including primary and secondary alcohols, esters, carbonyl compounds including ketones and aldehydes; lactones; other cyclic organic materials including benzene derivatives, alicyclic compounds, heterocyclics such as furans, pyridines, pyrazines and the like; sulfur-containing compounds including thiols, sulfides, disulfides and the like; proteins; lipids, carbohydrates; so-called flavor potentiators such as monosodium glutamate; magnesium glutamate, calcium glutamate, guanylates and inosinates; natural flavoring materials such as cocoa, vanilla and caramel; essential oils and extracts such as anise oil, clove oil and the like and artificial flavoring materials such as vanillin, ethyl vanillin and the like.

Specific preferred flavor adjuvants include but are not limited to the following: anise oil; ethyl-2-methyl butyrate; vanillin; cis-3-heptenol; cis-3-hexenol; trans-2-heptenal; butyl valerate; 2,3-diethyl pyrazine; methyl cyclo-pentenolone; benzaldehyde; valerian oil; 3,4-dimethoxyphenol; amyl acetate; amyl cinnamate; γ-butyryl lactone; furfural; trimethyl pyrazine; phenyl acetic acid; isovaleraldehyde; ethyl maltol; ethyl vanillin; ethyl valerate; ethyl butyrate; cocoa extract; coffee extract; peppermint oil; spearmint oil; clove oil; anethol; cardamom oil; wintergreen oil; cinnamic aldehyde; ethyl-2-methyl valerate; γ-hexenyl lactone; 2,4-decadienal; 2,4-heptadienal; methyl thiazole alcohol (4-methyl-5-(β-hydroxyethyl thiazole); 2-methyl butanethiol; 4-mercapto-2-butanone; 3-mercapto-2-pentanone; 1-mercapto-2-propane; benzaldehyde; furfural; furfuryl alcohol; 2-mercapto propionic acid; alkyl pyrazine; methyl pyrazine; 2-ethyl-3-methyl pyrazine; tetramethyl pyrazine; polysulfides; dipropyl disulfide; methyl benzyl disulfide; alkyl thiophene; 2,3-dimethyl thiophene; 5-methyl furfural; acetyl furan; 2,4-decadienal; guiacol; phenyl acetaldehyde; β-decalactone; d-limonene; acetoin; amyl acetate; maltol; ethyl butyrate; levulinic acid; piperonal; ethyl acetate; n-octanal; n-pentanal; n-hexanal; diacetyl; monosodium glutamate; monopotassium glutamate; sulfur-containing amino acids, e.g., cysteine; hydrolyzed vegetable protein; 2-methylfuran-3-thiol; 2-methyldihydrofuran-3-thiol; 2,5-dimethylfuran-3-thiol; hydrolyzed fish protein; tetramethyl pyrazine; propylpropenyl disulfide; propylpropenyl trisulfide; diallyl disulfide; diallyl trisulfide; dipropenyl disulfide; dipropenyl trisulfide; 4-methyl-2-[(methylthio)-ethyl]-1,3-dithiolane; 4,5-dimethyl-2-(methylthiomethyl)- 1,3 -dithiolne; and 4-methyl-2-(methylthiomethyl)-1,3-dithiolane. These and other flavor ingredients are provided in US-A-6,110,520 and US-A-6,333,180.

The flavors can be combined with one or more vehicles or carriers for adding them to the particular product. Vehicles can be edible or otherwise suitable materials such as ethyl alcohol, propylene glycol, water and the like, as described supra. Carriers include materials such as gum arabic, carrageenan, xanthan gum, guar gum and the like.

A particularly effective method to carry out the present invention is to incorporate the fragrance in a polymer that is the contact layer in the invention. A preferred embodiment is POLYIFF brand fragranced polymer products produced by International Flavors & Fragrance Inc., N.Y., N.Y. These fragranced polymers have been formed in fabrics containing at least one fragrance containing fiber in sachets as described in US-A-6,213,409, and in fiber form as set forth in US-A-6,207,274. The fragranced polymer can be formed into the appropriate form using extrusion, calendaring film-forming or other appropriate technology to create the polymer shape desired. Suitable polymers include but are not limited to polyethylene, polypropylene, polystyrene, ester terminated polyamide, polyethylene terephlalate and polystyrene. Alternatively the fragrance can be incorporated in a wax or fat material, preferably a lining material which contains a wax or fat material.

The present invention, in any embodiment, presents a wide variety of opportunities to enhance existing flavor and fragrance combinations or to provide new combinations. In many instances, the product and the fragrance are similar, such as a strawberry fragrance added to strawberry frosting. Alternatively, they may be complimentary such as mesquite or BBQ fragrance added to potato chips. Finally, it will be appreciated that the present invention is most typically applied to consumable products and due to the nature of the invention, the contents of the packaging will be edible or consumable while the package itself is not.

Those of skill in the art will understand that the time required for flavor and/or fragrance transfer is dependent primarily on the volatility and concentration of the fragrances, absorptive capacity of the food, and the intensity of the flavor desired. Additionally, as relative concentrations change over time, the equilibrium of the fragrance within a package will shift, particularly for longer shelf life items. However, the concentrations and techniques used to implement the present invention over any time period are well within the grasp of those of skill in the art and will not require undue experimentation to determine the optimal construction of a package made in accordance with the present invention.

Upon review of the foregoing, numerous adaptations, modifications, and alterations will occur to the reviewer. These will all be, however, within the spirit of the present invention. Accordingly, reference should be made to the appended claims in order to ascertain the true scope of the present invention.

## Claims

1. A method of transferring a fragrance to a product comprising the steps of: creating a package having an interior; placing a source of said fragrance within said interior; and contacting the product with said source.

2. The method of claim 1 wherein said package interior has at least one interior surface, said surface containing a fragrance.

3. The method of claim 2 further comprising the step of constructing at least a portion of said interior surface from a layer of polymeric film containing said fragrance.

4. The method of claim 2 further comprising the step of constructing at least a portion of said interior surface from a layer of a composite of polymeric films and said fragrance.

5. The method of claim 2 further comprising the step of applying a strip to said interior surface wherein the strip comprises said fragrance.

6. The method of claim 1, wherein said source comprises a sachet of absorbed fragrance.

7. A packaging material comprising at least one packaging material layer and at least one fragrance in an amount sufficient to diffuse within the interior of a package made from the packaging material under normal conditions of temperature and pressure.

8. The packaging material of claim 7, wherein at least one packaging material layer is a polymer layer comprising a polymer film containing a fragrance.

9. The packaging material of claim 8, wherein at least one polymer layer comprises a polymer film composite of a first polymeric material and a fragrance.

10. The packaging material of claim 6 wherein the packaging material comprises at least an inner aroma layer and an outer barrier layer, said inner aroma layer containing said fragrance and said outer barrier layer being relatively more inert and relatively air impermeable to create barrier to diffusion of said fragrance to an external environment.

11. The packaging material of claim 10, wherein the inner aroma layer comprises a material impregnated with a fragrance.

12. The packaging material of claim 11, wherein the material is paper.

13. The packaging material of claim 11, wherein the fragrance is formulated to release fragrance upon the application of an external stimulus.

14. The packaging material of claim 13 wherein the external stimulus is chosen from the group consisting of heat, mechanical energy, microwave energy and ultrasonic energy.

15. The packaging material of claim 8 wherein said material is produced by extrusion.

16. The packaging material of claim 9 wherein said material is produced by lamination.

17. The packaging material of claim 9 wherein said material is produced by film formation.

18. A product package comprising a package, and a product contained within the package, and further comprising a material impregnated with a fragrance in contact with said product.

19. The product package of claim 18, wherein the material is a film laminated to the package.

20. The product package of claim 18, wherein the material comprises one or more granular elements.

21. The product package of claim 20, wherein said granular elements are contained in a sachet.

22. The product package of claim 20, wherein the granular elements are comprised of a polymer and a fragrance.

23. The product package of claim 22, wherein the polymer is selected from the group consisting of ethyl-vinyl acetate, polyethylene, polypropylene, polystyrene, ester terminated polyamide, polyethylene terephlalate or polystyrene.

24. The product package of claim 20, wherein the granular elements are comprised of:
(a) a substrate chosen from the group consisting essentially of silicon dioxide, silicon dioxide, starch, clay, sugar, salts, cellulose, dextrin, silicate, cellulose, fat, carbon, calcium carbonate, sodium bicarbonate, citric acid, flour, or corn meal; and
(b) a fragrance.

25. The product package of claim 18, wherein the material comprises loose polymer strips inserted inside the package.

26. The product package of claim 25, wherein the polymer strips are comprised of ethyl-vinyl acetate.

27. The product package of claim 18, wherein the material comprises at least one strip affixed to an inner surface of the package.

28. The product package of claim 27, wherein the strip is affixed to a package seal.

29. The package of claim 18 wherein the fragrance is complementary to the product.

30. The package of claim 18 wherein the product is edible.

31. The package of claim 18 wherein the package comprises a resealable pouch.

32. The package of claim 18 wherein the package comprises a rigid, resealable container and a closure.

33. The package of claim 32, wherein the closure further comprises a compartment and the compartment contains the material impregnated with a fragrance.

34. The package of claim 18, wherein the material impregnated with a fragrance comprises a material that releases the fragrance upon an external stimulus.

35. The package of claim 34, wherein the external stimulus is heat, pressure or radiation.

36. Apparatus for adding a fragrance to a product comprising a source of gas flow containing a fragrance wherein the fragrance is transferred to a product within the chamber by contacting the product with the gas flow.

37. The apparatus of claim 36, wherein the apparatus comprises an outlet.

38. The apparatus of claim 36, wherein the outlet directs a stream of outlet gas to be recirculated.
